Europäisches Patentamt

European Patent Office

Office européen des brevets

(11) Numéro de publication: **0 274 320 B1**

# FASCICULE DE BREVET EUROPEEN

(45) Date de publication de fascicule du brevet:
**11.09.91**

(51) Int. Cl.⁵: **E05D 11/10**, E05F 1/12,
B60J 1/12

(21) Numéro de dépôt: **87402902.8**

(22) Date de dépôt: **18.12.87**

(54) **Baie à volet abattant notamment pour autocars.**

(30) Priorité: **19.12.86 FR 8617911**

(43) Date de publication de la demande:
**13.07.88 Bulletin 88/28**

(45) Mention de la délivrance du brevet:
**11.09.91 Bulletin 91/37**

(84) Etats contractants désignés:
**DE ES GB IT**

(56) Documents cités:
**DE-U- 7 710 136**   **FR-A- 987 028**
**FR-A- 1 438 833**   **FR-A- 2 442 946**
**FR-A- 2 508 092**   **FR-A- 2 594 166**

(73) Titulaire: **UCP Société INDUSTRIELLE**
**Complex Industriel de MERON B.P. 13**
**F-49260 Montreuil Bellay(FR)**

(72) Inventeur: **Wolf, François-Xavier**
**88, rue Armand Silvestre**
**F-92400 Courbevoie(FR)**

(74) Mandataire: **Portal, Gérard et al**
**Cabinet Beau de Loménie 55, rue d'Amster-**
**dam**
**F-75008 Paris(FR)**

## Description

La présente invention a pour objet une baie à volet abattant ayant deux positions d'ouverture, notamment pour autocars.

Les baies d'autocars avec volet abattant du type connu sont généralement constituées d'un cadre fixe entourant un volet abattant, et prolongé par une glace fixe inférieure ; cet ensemble est monté dans un joint d'encadrement destiné à être fixé sur la carrosserie du car.

Sur la traverse inférieure du cadre fixe est articulé le volet abattant. Un boîtier est prévu à chaque extrémité du volet, lequel est encadré sur ses quatre côtés ; ces boîtiers comportent chacun un axe en forme de chape à une extrémité, avec un ressort et une roulette se déplaçant sur deux rampes crantées, prévues à chaque extrémité de la traverse du cadre fixe.

Le volet peut évoluer d'une position de fermeture à une position intermédiaire d'ouverture et de celle-ci à une position d'ouverture totale.

Toutefois, une telle baie présente deux inconvénients majeurs :

- le premier inconvénient réside dans le fait que lesdites rampes sont en saillie à l'intérieur de la baie, et constituent une gêne pour la manoeuvre des stores ou des rideaux éventuels ;

- le second inconvénient réside dans le fait que ces rampes, étant généralement placées à la hauteur de la tête des passagers, constituent des zones agressives en cas de heurts.

Pour résoudre ce problème, il est proposé dans la demande de brevet français 2.508.092 d'introduire la glace dans un bas de glace basculant articulé sur une traverse fixe, ledit bas de glace comportant une portion en forme de doigt coopérant avec un élément élastique disposé dans un logement prévu dans le cadre fixe.

Cependant, un tel dispositif n'est pas entièrement satisfaisant en raison des problèmes d'usure des éléments déformables.

Par ailleurs, le document DE-U- 77 10 136 correspondant au préambule de la père revendication décrit une baie à volet abattant à deux positions d'ouverture, comprenant un cadre fixe entourant un volet abattant, ledit cadre fixe comportant à sa partie inférieure une traverse fixe, sur laquelle est articulé le volet abattant, lequel comprend une glace munie d'une poignet de manoeuvre et scellée dans un bas de glace basculant articulé sur la traverse fixe, ce bas de glace comportant d'une part, un noeud longitudinal cylindrique, et d'autre part, une rainure longitudinale parallèle audit noeud, la traverse fixe comportant d'une part, une rainure longitudinale d'articulation dans laquelle est logé ledit noeud, et d'autre part, une gorge longitudinale en regard de ladite rainure et parallèle à ladite rainure d'articulation. Un ressort en épingle est monté entre cette gorge et la rainure, et exerce une pression sur le bas de glace basculant pour amener le volet basculant alternativement dans une position intermédiaire d'ouverture dans laquelle le ressort se trouve dans une position d'équilibre, c'est-à-dire dans le plan passant par la rainure d'articulation et par la gorge, ou dans une position extrême de fermeture ou d'ouverture.

Cependant, cette structure ne permet pas de garantir l'obtention d'une position intermédiaire stable du volet basculant.

La présente invention a pour objet de résoudre le problème technique consistant en la fourniture d'une baie du type précité, dont la structure garantie une position intermédiaire stable du volet.

La solution, conforme à la présente invention, pour résoudre ce problème consiste en une baie à volet abattant à deux positions d'ouverture, notamment pour autocars, du type comprenant un cadre fixe entourant un volet abattant, le cadre fixe comportant à sa partie inférieure une traverse fixe sur laquelle est articulé le volet abattant, lequel comprend une glace munie d'une poignée de manoeuvre et scellée dans un bas de glace basculant articulé sur la traverse fixe, ledit bas de glace comportant :

- d'une part, un noeud longitudinal cylindrique,
- et d'autre part, une rainure longitudinale parallèle audit noeud, ladite traverse fixe comportant :
- d'une part, une rainure longitudinale d'articulation dans laquelle est logé ledit noeud,
- d'autre part, une gorge longitudinale en regard de la rainure et parallèle à ladite rainure d'articulation ;

un ressort en épingle étant monté entre ladite gorge et ladite rainure, et exerce une pression sur le bas de glace basculant pour amener le volet basculant alternativement dans une position intermédiaire d'ouverture dans laquelle ledit ressort se trouve dans une position d'équilibre, ou dans une position extrême de fermeture ou d'ouverture totale, caractérisée en ce que ledit bas de glace basculant comporte une seconde rainure longitudinale parallèle au noeud, en ce que lesdites rainures longitudinales sont équidistantes dudit noeud, en ce que la gorge longitudinale se trouve aussi en regard de la seconde rainure ; et en ce qu'un second ressort en épingle est monté en couple avec le premier ressort en épingle, entre la gorge et ladite seconde rainure de telle sorte que, dans la position intermédiaire d'ouverture, les deux ressorts en épingle de chaque couple se trouvent dans une position d'équilibre stable de part et d'autre du plan, passant par la rainure d'articulation et par la gorge, tandis que dans la position extrême de fermeture ou d'ouverture totale, les deux ressorts en épingle se trouvent d'un même côté dudit plan, et en ce que le cadre fixe entourant le volet abattant est prolongé par ne glace fixe inférieure, cet ensemble étant monté dans un joint d'encadrement destiné à être fixé notamment sur la carosserie du car.

Selon une caractéristique particulière, la traverse fixe est constituée :
- d'une part, par un profilé en forme de cornière comportant sur la face interne de son aile verticale une rainure cylindrique longitudinale d'articulation,
- d'autre part, par une rapplique fixée sur le bord libre de l'autre aile du profilé, parallèlement à ladite aile verticale, ladite rapplique étant munie d'une gorge longitudinale parallèle à ladite rainure d'articulation ;

l'extrémité supérieure de la rapplique est en outre légèrement coudée vers l'intérieur et terminée par une butée d'amortissement sur laquelle vient se plaquer la glace du volet basculant en position d'ouverture totale.

Selon un mode de réalisation, les ressorts sont réalisés en fil rond d'acier plié en forme de S.

Selon une variante, les ressorts sont réalisés en fil rond d'acier plié en forme de S à l'une de ses extrémités et en forme de S inversé à l'autre extrémité, la hauteur de la branche en S étant égale à celle de la branche en S inversé, et étant en outre légèrement supérieure à la distance entre ladite gorge et la rainure dans la position extrême de fermeture ou d'ouverture totale du volet abattant.

Selon une autre variante, la hauteur de l'une des branches du ressort est inférieure à celle de l'autre branche mais supérieure à la distance entre ladite gorge et la rainure dans la position intermédiaire d'ouverture du volet abattant.

De préférence, un rouleau tubulaire est enfilé autour de la portion intermédiaire du ressort ou de l'une des branches du S.

On décrit l'invention dans ce que suit en référence au dessin ci-joint sur lequel :
la figure 1 est une vue latérale en coupe verticale de la baie avec volet abattant pour autocars, selon l'invention, montrant le volet abattant dans la position de fermeture,
la figure 2 est une vue latérale en coupe agrandie de la traverse du châssis fixe et du profilé du bas de glace basculant montrant le volet abattant dans la position intermédiaire d'ouverture,
la figure 3 est une variante de la figure 2 montrant le volet abattant dans la position d'ouverture totale,
la figure 4 est une vue d'un ressort particulier, utilisé selon l'invention.

La baie d'autocar avec volet abattant selon la présente invention comporte :
- un cadre fixe (1),
- un volet abattant (2), et
- une glace fixe inférieure (3).

### Cadre fixe

Le cadre fixe (1) est réalisé à partir d'un profilé d'aluminium cintré ou assemblé à angles vifs par soudure ; un joint en caoutchouc (4) est monté dans une rainure aménagée à cet effet dans le profilé du cadre fixe pour assurer l'étanchéité lorsque le volet abattant vient plaquer sur ce cadre.

Une traverse fixe (5), réalisée elle aussi à partir d'un profilé d'aluminium, est assemblée par vis ou par soudure par ses extrémités à la partie inférieure du cadre fixe. Cette traverse en forme de cornière comporte sur toute la longueur de son aile verticale (5a) une rainure cylindrique (6) permettant l'articulation du volet abattant.

Une rapplique (7), réalisée également à partir d'un profilé d'aluminium, est fixée par vis sur le bord libre de l'autre aile (5b) de la traverse, parallèlement à l'aile verticale (5a) de façon à constituer un ensemble monobloc. Cette rapplique comporte une gorge longitudinale (8) aménagée pour recevoir une des branches des ressorts (9, 10) en forme d'épingle dont l'autre branche agit sur le volet basculant, soit pour plaquer ce volet sur le joint de caoutchouc (4) fixé dans le cadre fixe, dans la position de fermeture, soit pour plaquer ce volet sur le joint de caoutchouc (11), servant de butée amortisseur, logé dans une rainure (12) aménagée dans l'extrémité libre (7a) coudée vers l'intérieur du profilé de la rapplique (7), dans la position d'ouverture totale, soit pour maintenir ce volet dans une position intermédiaire d'ouverture.

### Volet abattant

Le volet abattant (2) est constitué d'une glace (13) en verre de sécurité sur laquelle est fixée une poignée de manoeuvre (14), le tout scellé par un joint de caoutchouc de calage ou par un mastic quelconque, dans une rainure (15) aménagée dans une traverse basculante appelée bas de glace de basculement (16), réalisée à partir d'un profilé d'aluminium.

Cette dernière pièce comporte :
- d'une part, un noeud longitudinal cylindrique (17) articulé dans la rainure cylindrique (6) de la traverse du cadre fixe,
- d'autre part, deux rainures longitudinales (18, 19) parallèles au noeud (17) et équidistantes de celui-ci, et aménagées sur la face antérieure du profilé du bas de glace (16), en regard de la gorge (8) de la rapplique (7) pour recevoir respectivement la deuxième branche des ressorts (9) et (10).

Les ressorts sont réalisés en fil rond d'acier plié en forme de S ; l'une des branches du S est logée dans la gorge (8) de la rapplique (7) tandis que l'autre branche du S est enfilée dans un rouleau tubulaire et vient prendre appui dans l'une des rainures (18, 19) du profilé de bas de glace (16) ; ces ressorts de même raideur sont couplés deux par deux et sont comprimés entre cette gorge et l'une ou l'autre rainure respectivement.

Selon une première variante, les ressorts (9) et (10) sont réalisés en fil rond d'acier, plié en forme de S à l'une de ses extrémités et en forme de S inversé à l'autre extrémité, la hauteur du S étant égale à celle du S inversé.

Glace fixe intérieure

La glace fixe inférieure (3) est en verre de sécurité scellée sur son bord supérieur dans une feuillure (20) solidaire de la partie inférieure de la traverse (5) du cadre fixe, à l'aide d'un joint de caoutchouc de calage ou d'un mastic quelconque.

L'ensemble cadre fixe (1) avec volet abattant (2) et glace fixe inférieure (3) est monté dans un anneau de caoutchouc d'encadrement (21) permettant la fixation de cet ensemble sur la carrosserie du car à la façon d'un pare-brise.

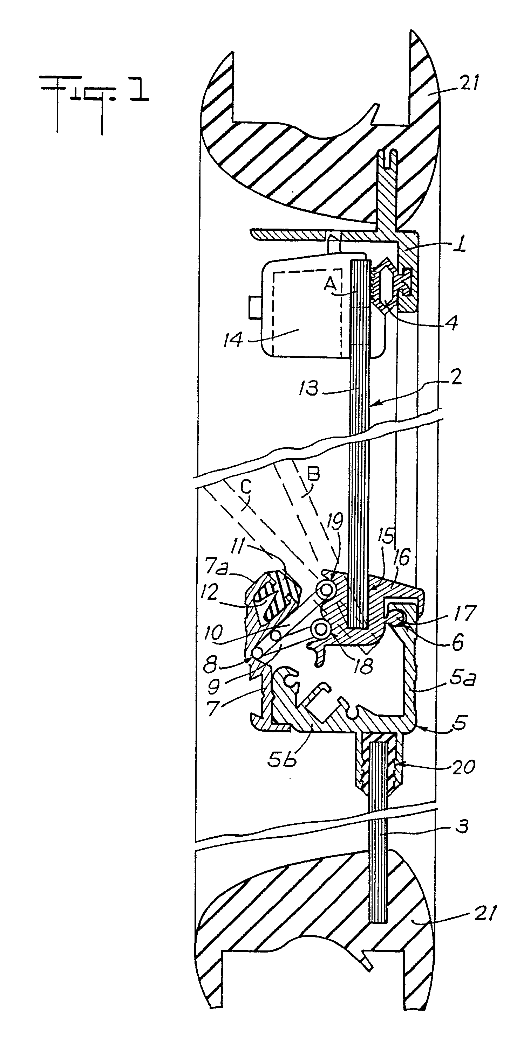

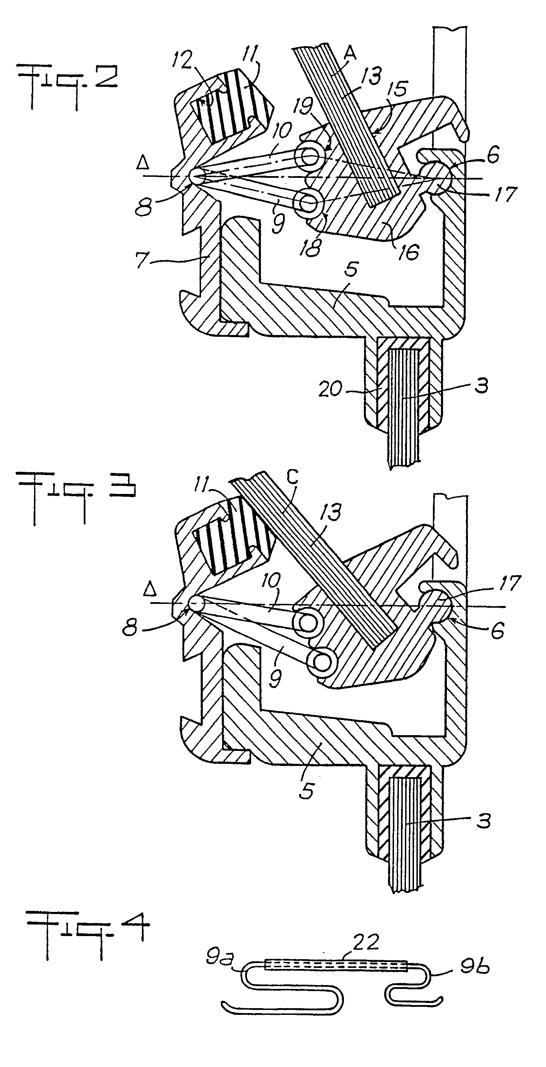

En fonctionnement, dans la position intermédiaire B d'ouverture du volet abattant, représentée à la figure 2, le couple de ressorts (9, 10) est dans la position de compression maximale et ces ressorts se trouvent de part et d'autre du plan Δ passant par la rainure d'articulation (6) de la traverse du cadre fixe (ou par le noeud d'articulation (17) du bas de glace basculant (16) et par la gorge (8) de la rapplique (7), et à égale distance par rapport à ce plan ; les forces exercées par ces ressorts sur le bas de glace (16) sont égales et leur résultante s'exerce suivant le plan Δ et s'annule avec la force de réaction opposée par le noeud d'articulation (17) ; le système se trouve ainsi en équilibre et le volet abattant est fermement maintenu dans cette position de semi-ouverture.

Lorsqu'on manoeuvre le volet abattant en tirant sur la poignée (14), ou en poussant sur cette poignée, le couple de ressorts (9, 10) est déplacé d'un seul côté du plan Δ, et la résultante des forces exercées par ces ressorts tend à repousser le bas de glace basculant (16) d'un côté ou de l'autre dudit plan et à plaquer le volet contre la butée (11) dans la position d'ouverture totale C (figure 3) ou contre le joint (4) dans la position de fermeture A (figure 1) selon que l'on tire sur la poignée (14) ou qu'on la pousse.

Selon une seconde variante représentée à la figure 4, les ressorts (9, 10) sont réalisés en fil rond d'acier plié en forme de S à l'une de ses extrémités (9a) et en forme de S inversé à l'autre extrémité (9b) et, de plus, la hauteur de la branche en S inversé est inférieure à celle de la branche en S et elle est légèrement supérieure à la distance entre la gorge (8) de la rapplique et la rainure (18) ou (19) dans la position intermédiaire d'ouverture du volet abattant ; par contre, la hauteur de la branche en S, qui est la plus haute, est légèrement supérieure à la distance séparant la gorge (8) de la rapplique et la rainure (18) ou (19) dans la position extrême de fermeture ou d'ouverture totale du volet abattant. La portion intermédiaire du ressort est en outre enfilée dans un rouleau tubulaire (22) destiné à faciliter le pivotement du ressort dans la rainure (18) ou (19) et à réduire l'usure de ladite rainure.

Ainsi, la branche du ressort la plus courte ne travaille en compression qu'à l'approche de la position intermédiaire d'ouverture du volet abattant où elle prend appui sur le fond de la gorge (8) de la rapplique pour renforcer la pression exercée par la branche la plus haute sur le profilé de bas de glace (16) pour mieux marquer cette position ; passée cette position d'équilibre, elle tendra à s'écarter dudit fond et n'a plus aucune action sur ledit bas de glace.

A titre d'exemple, l'angle d'ouverture intermédiaire du volet abattant est de 25° et son angle d'ouverture totale est de 45°.

**Revendications**

1. Baie à volet abattant à deux positions d'ouverture, notamment pour autocars, du type comprenant un cadre fixe (1) entourant un volet abattant (2), le cadre fixe (1) comportant à sa partie inférieure une traverse fixe (5) sur laquelle est articulé le volet abattant (2), lequel comprend une glace (13) munie d'une poignée de manoeuvre (14) et scellée dans un bas de glace basculant (16) articulé sur la traverse fixe, ledit bas de glace comportant :
   - d'une part, un noeud longitudinal cylindrique (17),
   - et d'autre part, une rainure longitudinale (19) parallèle audit noeud,
   ladite traverse fixe comportant :
   - d'une part, une rainure longitudinale d'articulation (6) dans laquelle est logé ledit noeud (17),
   - d'autre part, une gorge longitudinale (8) en regard de la rainure (19) et parallèle à ladite rainure d'articulation (6) ;
   un ressort en épingle (10) étant monté entre ladite gorge (8) et ladite rainure (19), et exerce une pression sur le bas de glace basculant pour amener le volet basculant alternativement dans une position intermédiaire d'ouverture dans laquelle ledit ressort (10) se trouve dans une position d'équilibre, ou dans une position extrême de fermeture ou d'ouverture totale, caractérisée en ce que ledit bas de glace basculant comporte une seconde rainure longitudinale (18) parallèle au noeud (17), en ce que lesdites rainures longitudinales (18, 19) sont équidistantes dudit noeud (17), en ce la gorge longitudinale (8) se trouve aussi en regard de la seconde rainure (18); et en ce qu'un second ressort en épingle (9) est monté en couple avec le premier ressort en épingle (10), entre la gorge (8) et ladite seconde rainure (18) de telle sorte que dans la position intermédiaire d'ouverture, les deux ressorts en épingle (9, 10) de chaque couple se trouvent dans une position d'équilibre stable de part et d'autre du plan, passant par la rainure d'articulation (6) et par la gorge (8), tandis que dans la position extrême de fermeture ou d'ouverture totale, les deux ressorts en épingle se trouvent d'un même côté dudit plan, et en ce que le cadre fixe (1) entourant le volet abattant (2) est prolongé par une glace fixe inférieure, cet ensemble étant monté dans un joint d'encadrement destiné à être fixé notamment sur la carosserie du car.

2. Baie selon la revendication 1, caractérisé en ce que la traverse fixe (5) est constituée :
   - d'une part, par un profilé en forme de cornière comportant sur la face interne de son aile verticale (5a) une rainure cylindrique longitudinale d'articulation (6),
   - d'autre part, par une rapplique fixée sur le bord libre de l'autre aile (5b) du profilé, parallèlement à ladite aile verticale (5a), ladite rapplique étant munie d'une gorge longitudinale (8) parallèle à ladite rainure d'articulation,
   l'extrémité supérieure de la rapplique étant coudée vers l'intérieur et terminée par une butée d'amortissement sur laquelle vient se plaquer la glace du volet basculant en position d'ouverture totale.

3. Baie selon la revendication 1 ou 2, caractérisée en ce que les ressorts sont réalisés en fil rond d'acier plié en forme de S.

4. Baie selon la revendication 1 ou 2, caractérisée en ce que les ressorts sont réalisés en fil rond d'acier plié en forme de S à l'une de ses extrémité et en forme de S inversé à l'autre extrémité, la hauteur de la branche en S étant égale à celle de la branche en S inversé, et étant en outre légèrement supérieure à la distance entre ladite gorge (8) et la rainure (18) ou (19) dans la position extrême de fermeture ou d'ouverture totale du volet abattant.

5. Baie selon l'une des revendications 1 à 3, caractérisée en ce que la hauteur de l'une des branches du ressort est inférieure à celle de l'autre branche mais supérieure à la distance entre ladite gorge (8) et la rainure (18) ou (19) dans la position intermédiaire d'ouverture du volet abattant.

6. Baie selon l'une des revendications 3 à 5, caractérisée en ce qu'un rouleau tubulaire est enfilé autour de la portion intermédiaire du ressort ou de l'une des branches du S.

**Claims**

1. Window aperture having a pivoted flap with two opening positions, especially for motor coaches, of the type comprising a fixed frame (1) surrounding a pivoted flap (2), the fixed frame (1) comprising in its lower part a fixed cross member (5) on which is articulated the pivoted flap (2), which flap comprises a pane (13) provided with an operating handle (14) and sealed in a tilting pane base (16) articulated on the fixed cross member, the said pane base comprising:
   - on the one hand, a cylindrical longitudinal knob (17),
   - and, on the other hand, a longitudinal groove (19) parallel to the said knob,
   the said fixed cross member comprising:
   - on the one hand, a longitudinal articulation groove (6) in which the said knob is accommodated (17),
   - on the other hand, a longitudinal recess (8) facing the groove (19) and parallel to the said articulation groove (6);
   a kickover spring (10) being mounted between the said recess (8) and the said groove (19) and exerting a pressure on the tilting pane base to bring the tilting flap alternately into an intermediate opening position, in which the said spring (10) is in a position of equilibrium, or into an extreme position of complete closure or opening, characterised in that the said tilting pane base comprises a second longitudinal groove (18) parallel to the knob (17), in that the said longitudinal grooves (18, 19) are equidistant from the said knob (17), in that the longitudinal recess (8) also faces the second groove (18); and in that a second kickover spring (9) is mounted in a pair with the first kickover spring (10), between the recess (8) and the said second groove (18), in such a way that, in the intermediate opening position, the two kickover springs (9, 10) of each pair are in a stable position of equilibrium on each side of the plane passing through the articulation groove (6) and through the recess (8), while, in the extreme position of complete closure or opening, the two kickover springs are on the same side of the said plane, and in that the fixed frame (1) surrounding the pivoted flap (2) is extended by a lower fixed pane, this assembly being mounted in a framing seal intended to be fixed especially on the bodywork of the coach.

2. Window aperture according to Claim 1, characterised in that the fixed cross member (5) is constituted:
   - on the one hand, by a section in the form of an angle comprising on the internal face of its vertical leg (5a) a longitudinal cylindrical articulation groove (6),
   - on the other hand, by a fitting fixed on the free rim of the other leg (5b) of the section, in parallel with the said vertical leg (5a), the said fitting being provided with a longitudinal recess (8) parallel to the said articulation groove,

the upper end of the fitting being bent towards the inside and terminated by a damping stop on which the pane of the tilting flap comes to bear in the position of complete opening.

3. Window aperture according to Claim 1 or 2, characterised in that the springs are produced from round steel wire bent in the form of an S.

4. Window aperture according to Claim 1 or 2, characterised in that the springs are produced from round steel wire bent in the form of an S at one of its ends and in the form of a reversed S at the other end, the height of the branch in the form of an S being equal to that of the branch in the form of a reversed S and furthermore being slightly greater than the distance between the said recess (8) and the groove (18) or (19) in the extreme position of complete closure or opening of the pivoted flap.

5. Window aperture according to one of Claims 1 to 3, characterised in that the height of one of the branches of the spring is less than that of the other branch but greater than the distance between the said recess (8) and the groove (18) or (19) in the intermediate opening position of the pivoted flap.

6. Window aperture according to one of Claims 3 to 5, characterised in that a tubular roller is slipped on around the intermediate portion of the spring or of one of the branches of the S.

**Patentansprüche**

1. Öffnung mit anschlagender Klappe, mit zwei Öffnungsstellungen, insbesondere für Autobusse, vom Typ mit einem festen Rahmen (1), der eine anschlagende Klappe (2) umgibt, wobei der feste Rahmen (1) an seinem unteren Bereich eine feste Traverse (5) aufweist, auf der die anschlagende Klappe (2) angelenkt ist, die eine Fensterscheibe (13) aufweist, die mit einem Betätigungsgriff (14) versehen ist und in ein schwenkbares Scheibenunterteil (16) eingegossen ist, das an der festen Traverse angelenkt ist, wobei das Fensterunterteil aufweist:

   einerseits einen zylindrischen Längsknoten (17),

   und andererseits eine Längsrinne (19) parallel zu vorgenanntem Knoten,

   wobei die feste Traverse aufweist:

   einerseits eine Längsgelenkkerbe (6), in der der Knoten (17) aufgenommen ist,

   andererseits eine Längsauskehlung (8) gegenüber der Kerbe (19) und parallel zur Gelenkkerbe (6);

   eine Schnappfeder (10), die zwischen der Auskehlung (8) und der Kerbe (19) angebracht ist, und einen Druck auf das schwenkbare Scheibenunterteil ausübt, um die hin- und herschwenkende Klappe abwechselnd in eine Mittenstellung der Öffnung schwenkt, in der die genannte Feder (10) sich in einer Ausgleichsstellung befindet, oder in einer extremen Schließstellung oder kompletten Öffnungsstellung befindet, **dadurch gekennzeichnet, daß** das schwenkbare Scheibenunterteil eine zweite Längskerbe (18) parallel zum Knoten (17) aufweist, daß die Längskerben (18, 19) in gleichem Abstand vom Knoten (17) sind, daß die Längsauskehlung (8) sich ebenfalls gegenüber der zweiten Kerbe (18) befindet, und daß eine zweite Schnappfeder (9) gekoppelt mit der ersten Schnappfeder (10) zwischen der Auskehlung (8) und der zweiten Kerbe (18) angeordnet ist, derart, daß in der Zwischenöffnungsstellung die beiden Schnappfedern (9, 10) eines jeden Paares sich in einer stabilen Ausgleichsstellung beiderseits der Ebene befinden, die durch die Gelenkkerbe (6) und die Auskehlung (8) hindurchgeht, während in der Schließendstellung und vollkommenen Öffnungsstellung, die beiden Schnappfedern sich auf derselben Seite der Ebene befinden, und daß der feste Rahmen (1), der die anschlagende Klappe (2) umgibt, durch ein festes unteres Fenster verlängert wird, wobei die Anordnung in einer Rahmendichtung angeordnet ist, die dazu bestimmt ist, insbesondere an der Karosserie des Busses befestigt zu werden.

2. Öffnung nach Anspruch 1, **dadurch gekennzeichnet,** daß die feste Traverse (5) gebildet wird:

einerseits aus einem Profil in Form eines Winkelprofils, das auf der Innenseite seines vertikalen Schenkels (5a) eine zylindrische Längsgelenkkerbe (6) aufweist,

andererseits durch ein Gegenstück, das an dem freien Rand des anderen Schenkels (5b) des Profils befestigt ist, parallel zum vertikalen Schenkel (5a), wobei das Gegenstück mit einer Längsauskehlung (8) parallel zur Gelenkkerbe versehen ist, wobei das obere Ende des Gegenstücks nach innen umgeknickt ist und beendet wird durch einen Abfederungsanschlag, auf dem das Fenster der schwenkbaren Klappe in vollkommener Öffnungsstellung aufliegt.

3. Öffnung nach Anspruch 1 oder 2, **dadurch gekennzeichnet,** daß die Federn aus rundem Stahldraht gebildet sind, der in die Form eines S umgebogen ist.

4. Öffnung nach Anspruch 1 oder 2, **dadurch gekennzeichnet,** daß die Federn aus einem runden Stahldraht gebildet sind, der in S-Form gebogen ist, an einem ihrer Enden und in umgekehrter S-Form am anderen Ende ausgebildet ist, wobei die Höhe des Armes in S-Form gleich jener des Armes in umgekehrter S-Form ist, und darüber hinaus leicht größer ist als der Abstand zwischen der Auskehlung (8) und der Kerbe (18) oder (19) in der Schließendstellung oder der vollkommenen Öffnungsstellung der anschlagenden Klappe ist.

5. Öffnung nach einem der Ansprüche 1 bis 3, **dadurch gekennzeichnet,** daß die Höhe einer der Arme der Feder geringer ist als jene des anderen Armes, jedoch größer ist als der Abstand zwischen der Auskehlung (8) und der Kerbe (18) oder (19) in der Zwischenöffnungsstellung der anschlagenden Klappe.

6. Öffnung nach einem der Ansprüche 3 bis 5, **dadurch gekennzeichnet,** daß eine rohrförmige Rolle um den Mittenbereich der Feder oder um einen der Arme des S umwickelt ist.

Fig. 1

Fig. 2

Fig. 3

Fig. 4